# EUROPEAN PATENT APPLICATION

(11) **EP 3 223 000 A1**
(43) Date of publication of application: **27.09.2017**
(21) Application number: 17162917.3
(22) Date of filing: 24.03.2017
(51) Int. Cl.: G01N 21/90, B67B 1/04

(54) **METHOD AND APPARATUS FOR CHECKING THE INTEGRITY OF THE FINISH OF CORKED GLASS BOTTLES**

(30) Priority: 24.03.2016 IT UA20162005
(71) Applicant: Lottici, Marco, 43013 Langhirano (Parma) (IT)
(72) Inventor: Lottici, Marco, 43013 Langhirano (Parma) (IT)
(74) Representative: Dallaglio, Fabrizio

(57) **Abstract**

Method and apparatus (1) of checking and control of the integrity of the finish of previously corked glass bottles or containers (5), wherein said glass bottles are moved on a conveyor belt; the apparatus (1) comprising optical vision means constituted by a video camera (3), one or more plane-convex or double-convex lenses (6) with non-spherical section, at least one lighting unit. The lighting unit is configured for emitting at least two distinct and independent light beams or sources towards the container (5), the light sources are placed at different heights and directed towards the finish of the bottle so that a first light source (4) generates an oblique bottom to top lighting, a second light source (14) generates an oblique top to bottom lighting. Subsequently to said control, it is provided for fitting an element for holding the cork.

## Description

### FIELD OF APPLICATION OF THE INVENTION

The present invention refers to the glass bottles checking systems industry. Specifically, it addresses bottles containing sparkling wine and corked.

The checking system and method is carried out around the finish of the bottle, where the expression "finish" or "lip", is used to indicate the part in relief on the neck of some types of glass bottles, used for holding the corks in sparkling wine, through special wire cages.

Furthermore, the method and the relative apparatus are arranged and utilised downstream of bottle corking lines and ahead of the machines for fitting the wire cages for locking the cork.

Furthermore, the invention is particularly suitable for inspecting the finish of bottles filled with "champagne" wine.

### STATE OF THE ART

A glass container or bottle has a generally cylindrical volume or body closed by a bottom and an opposite extension which constitutes the neck that in turn bears a finish, i.e. smooth and flat sealing surface, against which the closure of the container occurs by means of a cork, thus enabling sealing.

The expression "champagne" bottle is used to indicate bottles containing champagne obtained according to the classic or "champenoise" method, i.e. a method that provides for the secondary fermentation in the bottle.

I.e. the assemblages of the various ones is carried out, and the wine blend is mixed with a small amount of liquid sugar, yeast, a small percentage of tannins referred to as "liqueur de tirage" which triggers the secondary fermentation in the bottle.

At this point, the bottles are sealed with a crown cork containing a small plastic container, the so-called "bidules".

The bottles are subsequently placed in underground cellars so as to complete the secondary fermentation which lasts three to four weeks. Then, the bottles should remain in the cellar for at least 15 months for non-vintage wines and three years for vintage wines. The best Champagne are aged for a longer period: three years for non-vintage and 6/7 years for vintage wines.

It is only at this point that bottles are ready to undergo "remuage", which consists in a movement that enables any deposit material of live yeasts, caused by the secondary fermentation, to end up in the plastic of the bidule, ready to be removed.

The conventional operation consists in positioning the bottles on special wooden racks, where the bottle can be inclined in an oblique fashion so as to move the fermentation towards the neck of the bottle. Every bottle is agitated and shaken manually (so-called "quart de poignèe") and the oblique inclination thereof is increased every time the operation is carried out. The bottles end up in vertical position after several operations. The entire operation occurs over a period of 12/20 weeks and it may be performed manually or automatically through faster and more economic solutions.

Once the bottle is in position, it is moved to the disgorgement station. There are two types of disgorgement: the ancient one referred to as "a la volèe" and the modern one referred to as "a la glacé". The lees are eliminated by introducing the bottle into a saline solution at very low temperatures and saline solution instantly freezes the lees. At this point, the cork is removed (i.e. disgorgement), and it comes off with the yeasts deposit.

The disgorgement action provides for hitting the crown cork once and decisively.

A drawback lies in the fact that during the disgorgement, especially in automated systems, there arises the risk that the area around the finish of the bottle hit by the blade cracks or weakens to the extent that it can subsequently break.

Thus, these defects on the surface of the finish could lead to visible defects that are unpleasant to the eyes of wine buyers, given that the wine in question is far from cheap. In addition, even though the risk is rather low, in that the wine is sparkling and pressurised, the splinter could remain in the bottle.

Thus, such defects should be detected on the mouths of these bottles so as to prevent the use thereof in case of defects, arising from the "disgorgement" or even due to other reasons.

The known methods and apparatus for checking the integrity of the bottles are not particularly useful for the situation described above.

For example, the Japanese patent application n° JP 2002 323456 describes a system for checking the presence of possible defects present in the cork of a container. However, such system can only be used for checking the cork, in that the finish is covered in the case outlined in the aforementioned patent. A similar system is also described in the international patent application n° WO 2015/185318.

A further solution is described in the French patent n° FR 2 561 228. However, such system provides for the use of a video camera arranged laterally with respect to the bottle, thus only enabling inspecting a limited portion of the bottle, otherwise one has to provide special means for the rotation thereof.

More generally, it should be observed that residual lees or wine may remain on the neck of bottle after the "disgorgement" action, thus making potential defects difficult to detect or the lees or wine residues may be mistaken for defects.

Thus, this residual material must be removed from the bottle for a proper inspection of the finish. However, though such residual material can be removed by cleaning the neck of the bottle, for example through a compressed air jet, this entails a concrete risk of introducing potential impurities into the bottle.

Thus, the cleaning operation must be carried out very carefully, hence slowing the cork fitting operations as a whole.

### DESCRIPTION AND ADVANTAGES OF THE INVENTION

The present invention is based on the technical problem of providing a method and an apparatus for checking the integrity of the finish or lips of glass bottles corked and filled with sparkling wine and particularly champagne through the classic method that enable overcoming at least one of the aforementioned disadvantages with reference to the prior art.

Furthermore, an object of the present invention is to provide an improved method and apparatus for checking the integrity of the finish or lips of glass bottles corked and filled with sparkling wine and particularly champagne through the classic method.

However, the invention is not restricted to the sole use in "champagne" bottles and for checking potential breakages during the disgorgement step, but also with all bottles corked with the so-called mushroom-shaped cork, even if there is no disgorgement step (as it occurs in moscato or prosecco wines).

The invention applies between the corking and the fitting of the safety wire cage. Positioning after corking also enables identifying any breakages that may occur after corking. On the contrary, conventional systems are positioned before corking and thus they obviously cannot check this too.

In addition, the above shows that the invention provides a simple, rational and inexpensive solution in that it does not affect previously existing apparatus and can be positioned independently.

These and other objects are attained due to the characteristics of the invention outlined in the independent claims 1 and 8, while the dependent claims outline preferred and/or particularly advantageous aspects of the invention.

In particular, an embodiment of the present invention provides a vision system (a video camera) for glass bottles, corked and advancing on a conveyor belt, which transits at least the upper part of the bottle through a lighting unit, directs the light rays of said lighting unit in a well-defined position (described hereinafter) and thus - through a plane-convex or double-convex lens with non-spherical section - directs the information received from the vision system to a computer processor which automatically reads the information and checks for potential discontinuities which identify micro-cracks or breakages mainly due to the previously described disgorgement action.

Thank to this solution, it is possible to check the bottle and precisely in the finish area when the bottle is already corked, so as to exploit the absence of pressurised liquid and foam which would distort the reading by the inspection visual system and the relative computing and processing software.

In addition, still thanks to the aforementioned lens, not only does the system see the mouth part but also the upper and lower parts and where:
- At the upper part, there is a cork whose walls can be checked for integrity thereof; in addition, any writings or codes can also be checked and read. The reading of the writings enables ensuring that the operator did not fit the wrong corks; furthermore, it enables monitoring traceability operations (sending the decoding of the writings or read codes to the monitoring system which memorises and checks them in real time).
- Defects of various origin (during transportation, ageing, due to impacts, when handling during disgorgement or due to the corking machine itself) may be detected at the lower part, i.e. the glass part beneath the mouth, up to the beginning of the actual neck. Thus, this area should also be checked.

The configuration outlined in the description below will show that the part of the lens used for the lateral view is the outer annular part, while the central part can be used for viewing the upper part of the cork.

Thanks to such solution, the method and apparatus are configured also for checking whether the cork is positioned in the right direction and - in case there are logos, writings, codes - check whether they are present, correct and it can read codes or writings still to ensure that the corks are the right ones and/or for managing traceability thereof.

In addition, in the central area of the lens there can be arranged a special lens that enables an enlarged view of the upper part of the cork. Should the upper part of the cork have no writings, the system checks whether the cork is inserted properly, checking the outer crown of the cork.

Actually, the aforementioned mushroom-shaped corks (used for champagne, prosecco, moscato and other similar sparkling wine) have different flat side. One side is actually flat and it is the one that goes into the bottle, while the other is rounded over the entire outer crown and this side should be on the outside.

The system and method are configured for also checking the image of the cork, to see whether it is different (both from above and the side) and whether it is rounded all around.

Thus, the invention checks the integrity of the cork both laterally and from above.

Another object of the invention is to provide an efficient lighting unit and by arranging maximising lighting means for collecting information on the contour of the area of the lips where the disgorgement occurs.

The lighting unit is defined by at least one light source. In an embodiment, there is a direct LED lighting that can have two or more rows. Alternatively, the lighting unit is constituted by diffused light lighting rings suitable to create a diffused light annular lighting.

A first light source is preferably constituted by a pair of LED lights arranged around the bottle transit line.

A second light source is arranged above the first, with respect to the vertical bottle transit line.

According to a first embodiment, a light source is positioned so as to direct a light beam directly on the upper portion of the finish, and precisely in the curved area beneath the cork.

In an embodiment, a light source is positioned so as to direct a light beam still on the upper portion of the finish, and precisely in the curved area beneath the cork but indirectly, i.e. initially passing through the same magnifying lens that is used by the video camera system. In this case, the lighting unit is arranged above the lens and it is suitable to shed light through the lens.

All objects and advantages outlined above are attained by the method and apparatus of checking of the integrity of the "finish" or "lips" or corked glass bottles, subject of the present invention, as defined in the claims that follow.

### BRIEF DESCRIPTION OF THE FIGURES

This and other characteristics shall be more apparent from the following description of some embodiments illustrated, by way of non-limiting example, in the attached drawings.
- Figure 1: illustrates the apparatus concerned,
- Figure 2: still illustrates the apparatus in an enlarged configuration in the lens and vision area,
- Figure 3: illustrates a flow chart of the method concerned.

### DESCRIPTION OF THE INVENTION

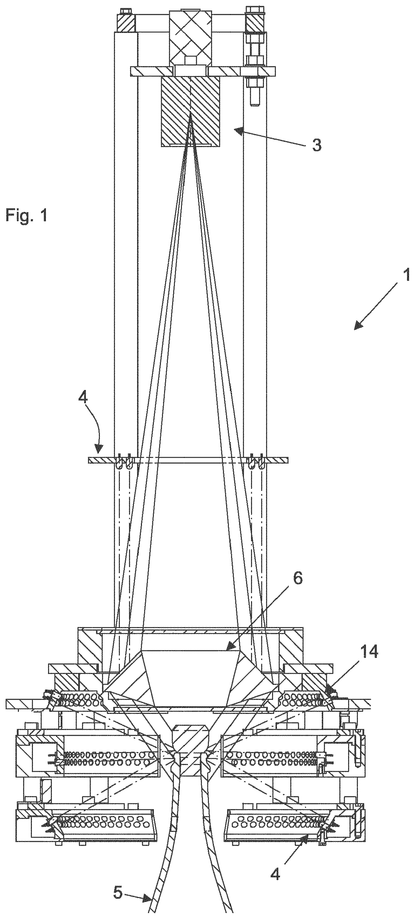

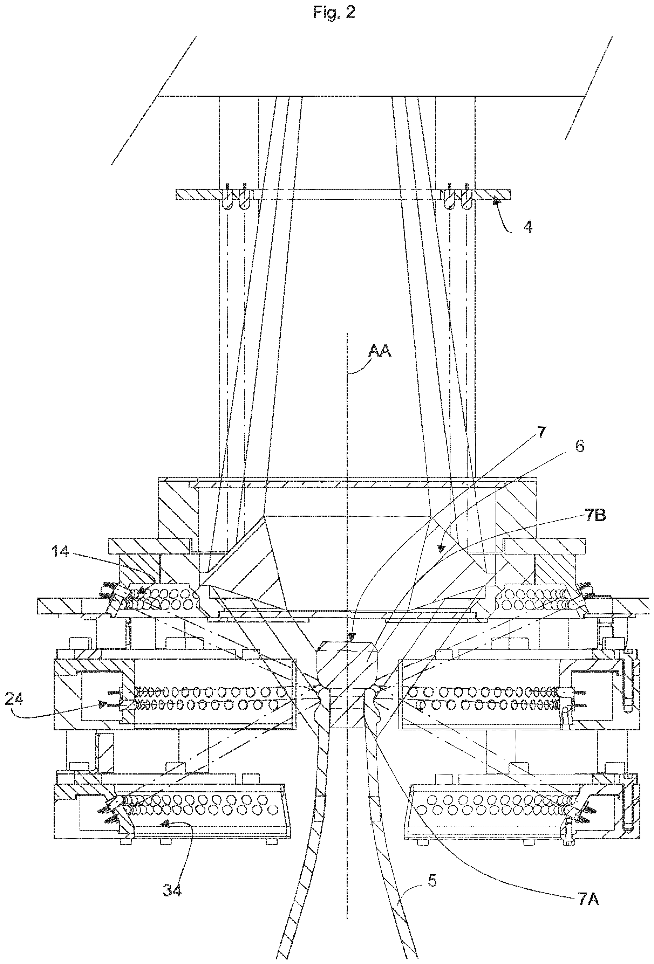

With particular reference to figures 1 and 2, it should be observed that the apparatus of checking of the integrity of the finish subject of the invention, is indicated in its entirety with 1.

Preferably, the apparatus 1 is made up at least of:
- optical vision means 3, such as a video camera,
- at least one plane-convex or double-convex lens 6, with non-spherical section,
- a lighting unit 4,
- A conveyor belt for displacing the container.

In this specific case, the aforementioned container is a glass bottle 5 containing a liquid; the bottle is closed by a cork 7, and contains sparkling wine, preferably champagne produced through the classic method, as outlined above.

The cork 7 used if of the elastically deformable type.

The following are defined on the cork 7, once inserted into the neck of the bottle 5: a stem 7A and a cap 7B, projecting from the neck, so as to be gripped to uncork the bottle.

The video camera 3 is oriented vertically and directed towards the underlying conveyor belt (not illustrated) on which said bottle 5 to be inspected transits.

Preferably, at least one biconvex lens is present and obtained as disclosed by patent n° EP1399732. The lens is obtained by moulding or machining by removing material starting from a block made of glass, optical glass or transparent plastic material with a refractive index that is uniform across the entire volume of the block.

The lens 6 is arranged between the container 5 and the video camera 3 and in a position substantially perpendicular to the container-video camera axis AA. The video camera 3 is positioned in a raised position with respect to the bottle 5 transiting on the conveyor.

Preferably, the lens 6 centrally bears a hole 9 arranged axially along the axis AA of the lens which enables direct view by the video camera 3 as well as the parts not directly visible by the video camera 3, i.e. the parts arranged substantially parallel to said axis AA of the lens and coincident with the video camera-container axis, typically the edge portions, whose visibility is limited by the presence of the curvature of the surface. Thus, the lens 6 is shaped in a manner such to divert - according to pre-set angles - the light rays coming from the container, to enable the simultaneous view, in a single image, of parts of the container 5 directly visible and parts of the container 5 not directly visible by said video camera 3.

The lighting unit, is generally made up of a plurality of light generator elements, alternatively:
- the lighting unit is defined by a plurality of narrow band light sources of the LED type, suitable to create direct lighting.
- the lighting unit is constituted by diffused light lighting rings suitable to create a diffused light annular lighting.

In an embodiment, the lighting unit comprises a light source. The light source is arranged at a lower position with respect to the position of the finish of the bottle to be inspected. In this way, and as observable from figure 2, the plurality of lights of the light source emits light beams concentrated in a defined area of the finish i.e. the lower portion indicated with reference number 20. Such light beam is then reflected by the curved surface of the finish towards the lens and then from the latter reflected upwards it reaches the video camera, which can thus acquire and "see" a circumference if there are no detectable defects.

For the sake of complete description, it could also be said that the lighting element is configured to generate a light beam so as to generate a bottom to top oblique lighting on the container 5, where top means the lower portion of the finish of the bottle in vision configuration (figure 1).

In an embodiment, the light source is divided into two parts which extend perimetrically to a transit path of the bottle. The two parts are separated at the transit path for a distance at least equivalent to the diameter of the bottle, so as to enable an almost complete lighting of the perimeter of the bottle though allowing the light to filter along the relative transit path. Preferably, each of the two parts is circumferential-arc-shaped, with a substantially semi-circular extension, i.e. leaving the section intended for the bottle to pass uncovered.

According to another embodiment, the lighting unit comprises a light source configured to generate a light beam so as to generate a top to bottom oblique lighting on the container 5, where the expression bottom means a lower level and precisely the upper part of the curve of the finish, where the inserted cork abuts.

There can be provided for two configurations of the source from the top and precisely:
- a form of the light source is constituted by lights also arranged divided into two parts and around the transit path of the bottle, like in the case described above; in this case, the two parts are arranged at the sides of said path at the highest position both with respect to the position of the finish of the bottle to be inspected and obviously the first light source. The light source is configured to emit light beams concentrated in a defined area of the finish i.e. the upper portion indicated previously and with reference number 30.
- In another embodiment, the light source is made up of a lighting element arranged above the lens 6 and configured to shed light through the lens 6; however, in this case the lighting element:
   ∘ is arranged so as to shed light according to axis AA of the lens and, through the lens 6, the container 5
   ∘ is made up of at least one series of lights arranged circularly and on a larger diameter than the diameter of the hole 9.

Also in these cases, the light beam is configured to reach and be reflected by the curved surface of the finish towards the lens and then from the latter, reflected upwards, it reaches the video camera which can thus acquire and "see" a circumference if there are no detectable defects.

In a further embodiment, the light source is positioned at the height of the finish, and it directs a light beam with an almost horizontal direction and such to be reflected towards the lens and thus the video camera.

It should be observed that several light sources obtained according to the embodiments described above could be combined.

In the embodiment described in figure 1, there are four light sources, one for each of the embodiments described above.

Thus, there is a first light source 4 positioned above the lens 6 and which lights through the lens 6, a second light source 14 which directs the light beam towards the finish in a top to bottom fashion, a third light source 24 substantially aligned to the finish and a fourth light source 34 which directs the light beam towards the finish in a bottom to top fashion.

The applicant observed that sufficient light can be obtained using at least one light source from above, thus either the first light source 4 or the second light source 14. In a preferred embodiment, at least both light sources 4 and 14 are used. It should also be observed that, in a preferred embodiment, the light sources 4 and 14 are arranged in a closed loop fashion around the axis AA.

Acquisition occurs through a software processor; the two independent lighting sources have the effect of creating at least two concentric circumferential light lines, each representing the area of the finish subject of the light beam thereof.

The third source, if present, will produce a third additional ring.

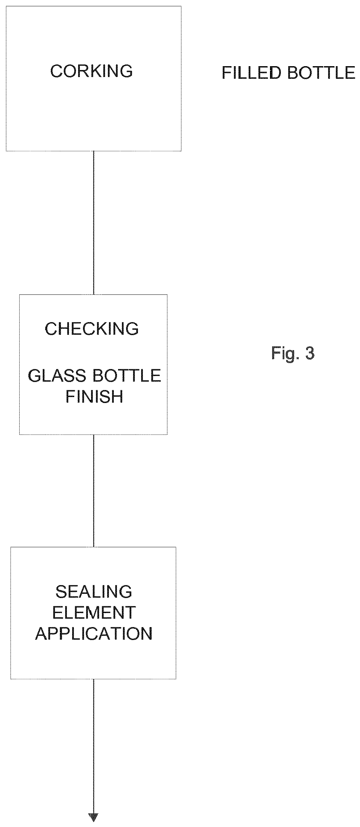

With reference to figure 3, it should be observed that the method of inspection and checking of the integrity of the finish of glass containers or bottles 5 containing sparkling wine provides for performing said checking of the finish with the bottle 5 previously corked, through optical vision means made up of video cameras, lenses and lighting systems; said checking subsequently provides for fitting an element for holding the cork.

Precisely, checking the bottle 5 initially provides for closing the bottle by means of an elastically deformable cork 7.

The cork 7 is made in such a manner that the cap 7B has at least one substantially cylindrical or tapered-shaped portion widening in the opposite direction with respect to the neck of the bottle.

As observable from figure 2, such shape enables maintaining the cap 7B sufficiently spaced from the edge of the neck of the bottle even with the cork inserted.

This enables the optical vision means to also view the edge of the bottle neck and the areas adjacent thereto.

Thus, the corked bottle is inserted into a vision area.

Preferably, the vision means acquire images of the bottle from above. According to a preferred embodiment, the images are acquired using a plane-convex or double-convex lens, with non-spherical section.

In the present embodiment, the vision area is thus defined by the video camera and the overlying lens.

In a preferred embodiment, the images are acquired by directing at least two independent light beams on two different levels of the finish of the corked bottle. Thus, the light sources are reflected towards the lens and the video camera-equipped vision system.

Thus, the image is acquired and processed by the video camera through a processing means.

Possibly, before acquiring the image, but after fitting the cork in any case, there may be provided for a step of cleaning the finish, for example through a compressed air jet.

Once the image has been acquired, or more generally once the bottle has been checked, a cage-like holding element, which enables compressing the cork towards the neck of the bottle, is fitted into the bottle. Thus, the cap 7B is deformed so that the edge of the bottle neck is at least partly covered by the cap.

This enables guaranteeing the optimal closure of the bottle and simultaneously enabling an accurate and quick inspection of the finish.

## Claims

1. Method of inspection and checking of the integrity of the finish of glass containers or bottles (5) containing sparkling wine, **characterised in that** it comprises the steps of:
a. Fitting an elastically deformable cork (7) to the bottle, in a manner such that, once the cork is inserted into the neck of the bottle (5), there remains defined a stem (7A) inserted into the bottle and a cap (7B), projecting from the neck, the cap (7B) having at least one substantially cylindrical or tapered-shaped portion that widens in the direction opposite to the neck of the bottle;
b. performing said check of the finish with the corked bottle (5) through optical vision means constituted by at least one video camera, a lens and a lighting unit;
c. fitting, subsequently to said check, a cage-like element for holding the cork, so as to compress the cork and deform the cap (7B) towards the neck of the bottle.

2. Method according to claim 1, wherein the check on the corked bottle (5) includes the steps of:
a. Inserting the corked bottle into a vision area defined by the overlying video camera and lens,
b. Directing at least one light beam on the finish of the corked bottle,
c. Reflecting said light beam towards the lens and the optical vision means,
d. Acquiring and processing the data collected by the optical vision means through a processing means.

3. Method according to claim 1 or 2, wherein the bottle contains sparkling wine and the cork is fitted subsequently to wine disgorging actions.

4. Method according to claim 3, **characterised in that in that** said sparkling wine is champagne previously obtained by eliminating the "bidules" through a disgorgement action.

5. Method according to claim 4, comprises a further step of cleaning the finish after fitting the cork and before checking the finish.

6. Method according to claim 5, wherein cleaning is carried out using a compressed air jet.

7. Method according to any one of the preceding claims, wherein the cork of the glass bottle is also checked using a video camera or an additional interposed lens.

8. Method according to any one of the preceding claims, wherein said checking of the finish comprises the acquisition of an image through said video camera.

9. Method according to claim 8, wherein said image is acquired from above.

10. Method according to one of the preceding claims, wherein said lens is plane-convex, or double-convex, with non-spherical section.

11. Apparatus (1) of checking and control of the integrity of the finish of previously corked glass bottles or containers (5) for implementing the method according to one of the preceding claims, associated or associable with a conveyor system for displacing bottles or containers, the apparatus (1) comprising optical vision means including:
a. a video camera (3),
b. one or more plane-convex or double-convex lenses (6), with non-spherical section,
c. at least one lighting unit;
**characterised in that** the lighting unit comprises a first light source (4) and a second light source (14), wherein the light sources are placed at different heights and directed towards the finish of the bottle, wherein the first light source (4) is placed above the lens and underlying the video camera and generates a light beam directed towards the finish passing through the lens and directed from top to bottom and the second light source (14) is positioned aligned or underlying the lens and generates an oblique light beam from top to bottom and directed towards the finish without passing through the lens, the light beams subsequently being reflected by the curved surface of the finish towards the lens, and then from the latter, reflected upwards, it reaches the video camera.

12. Apparatus according to claim 11, wherein said first light source (4) and/or said second light source (14) extend in a closed loop fashion around an axis (AA) of the lens.

13. Apparatus according to claim 11 or 12, comprising a third light source (24) arranged in a manner such to illuminate the corked bottle (5) at the height of the finish thereof, directing a third light beam with an almost horizontal direction but in a manner such to be reflected towards the lens (6) and thus the video camera (3).

14. Apparatus according to one of claims 11 to 13, comprising a fourth light source (34) configured to generate an oblique bottom to top light beam towards the finish of the bottle.

15. Apparatus according to one of claims 11 to 14, wherein the third light source (24) and/or the fourth light source (34) comprises lights arranged in a semi-circular fashion around the transit path of the container (5).
